# EUROPEAN PATENT SPECIFICATION

(11) **EP 1 101 583 B1**
(45) Date of publication and mention of the grant of the patent: **02.03.2005**
(21) Application number: 00124238.7
(22) Date of filing: 10.11.2000
(51) Int. Cl.: B28B 5/02, B28B 11/24, B28B 13/02, B28B 7/46

(54) **Method and apparatus for forming ceramic products**
Verfahren und Vorrichtung zum Herstellen von keramischen Gegenständen
Procédé et appareil pour la fabrication de produits céramiques

(30) Priority: 16.11.1999 IT MO990258
(43) Date of publication of application: 23.05.2001
(73) Proprietor: Morandi, Eugenio, 41049 Sassuolo (Modena) (IT); Carnevali, Gianfranco, 41049 Sassuolo (Modena) (IT)
(72) Inventor: Morandi, Eugenio, 41049 Sassuolo (Modena) (IT); Carnevali, Gianfranco, 41049 Sassuolo (Modena) (IT)
(74) Representative: Modiano, Guido, Dr.-Ing.

(56) References cited:
- DE-A- 3 436 906
- DE-A- 4 130 130
- GB-A- 1 575 677
- US-A- 1 702 730
- US-A- 2 582 993
- US-A- 2 737 858
- US-A- 4 194 946

## Description

The present invention relates to a method for forming ceramic products and to the associated apparatus.

Several technologies for the manufacture of ceramic products, such as tiles and the like, are known and can be distinguished according to the formation method that is used, i.e. pressing or extrusion.

Formation by pressing, which is used in the manufacture of particular types of product such as, for example, porcelain stoneware and single-fired products, generally entails the wet grinding of the raw materials in drum mills (Alsing) which operate continuously or discontinuously in order to obtain an aqueous suspension of ground solid particles which, in the ceramics jargon, is known as slurry.

The slurry is discharged from the mills and deposited in suitably provided settling vats, where it is kept slowly stirred.

In the production of single-fired products, the slurry is used raw; in the production of porcelain stoneware, various coloring oxides, suitably ground, are added in some of the settling vats of the base slurry, thus obtaining corresponding colored slurries.

The various slurries are then dried to powders, which have a controlled degree of humidity, inside spray dryers (atomizers).

Each different powder must be stored in a respective silo, where it matures and homogenizes.

It is further possible to change the particle size and the shape of the powders with particular methods, such as for example granulation, which allow to obtain grains or flakes which are stored in a matching number of suitably provided silos.

The powders, the grains and/or the flakes, taken from the respective silos in predefined qualities and quantities, are then sent to the feeder system of the presses.

Pressing occurs in molds which allow to obtain products having specific dimensions, a selected surface and/or decorative patterns provided by adopting particular systems for feeding and loading the molds.

The products are then subjected to drying, optional glazing and/or decoration, and firing in roller kilns.

The process ends with the selection and packaging of the fired products.

Formation by extrusion is used, for example, in the manufacture of the product type known as "terracotta" and marginally also in the production of porcelain stoneware, particularly in order to obtain special parts, and of single-fired products.

The extrusion process, too, entails the wet grinding of the raw materials in drum mills (Alsing), from which the slurry is extracted and then deposited in appropriate settling vats.

In order to eliminate part of the grinding water, the slurry is filtered inside suitably provided filter presses from which a plastic paste is obtained.

The paste is then extruded through extrusion plates, from which it exits as continuous ribbons which have a specific transverse cross-section and are then cut into products (tiles) having the selected dimensions.

The extruded products then substantially follow the same steps provided in the press-forming process, i.e. drying, optional glazing and/or decoration, firing (in tunnel kilns), selection and packaging.

Both formation methods are not free from drawbacks, including the fact that the slurries discharged from the mills must be either dried, in order to obtain the powders having the characteristics required for pressing, or filtered, in order to obtain the pastes having the characteristics required for extrusion; accordingly, intermediate treatments are required between grinding and forming (spray-drying or filtration), consequently requiring the installation of respective treatment stations and an increase in the complexity of the production apparatus, an increase in the investment and operating costs, an extension and slowing of the production line, high labor costs and considerable energy consumption.

It is also noted that in the case of pressing of porcelain stoneware, the management of the powders, which are different in terms of color, shape and/or particle size, is complicated and expensive, requires the installation of an appropriately provided storage station which has a plurality of silos inside which possibly large reserves of such powders are stored, said silos being controlled by a powder loading and removal extraction system.

All this, in addition to having a negative effect on the financial budget of a company, prevents said company from adapting to current management methods, which are based on the reduction of materials throughput time, on a reduction of intermediate reserve levels and on programmed procurement of raw materials.

Fabrication of continuous ceramic slip elements is taught by GB 1 575 677 and DE 4130130 A.

The aim of the present invention is to eliminate the above-noted drawbacks of conventional types of forming method by providing a method for forming ceramic products and an associated apparatus which allow to simplify the production line, reduce manufacturing times, reduce reserves and streamline the management of raw materials and semifinished products, reduce energy consumption, reduce the use of labor and production costs, thus allowing the company to achieve considerable financial savings.

Within the scope of this aim, an object of the present invention is to achieve the above aim with a structure which is simple, relatively easy to provide in practice, safe in use, effective in operation and relatively low in cost.

This aim and this object are achieved by a method according to the invention for forming ceramic products, that comprises the steps set forth in claim 1.

The corresponding apparatus according to the invention is characterized by the features set forth in claims.

Further characteristics and advantages of the present invention will become better apparent from the detailed description of a preferred but not exclusive embodiment of a method for forming ceramic products and of the corresponding apparatus, illustrated only by way of non-limitative example in the accompanying drawings, wherein:
Figure 1 is a partially sectional front view of a portion of the apparatus for forming ceramic products according to the invention;
Figure 2 is a transverse sectional view of a drying station of the apparatus according to the invention;

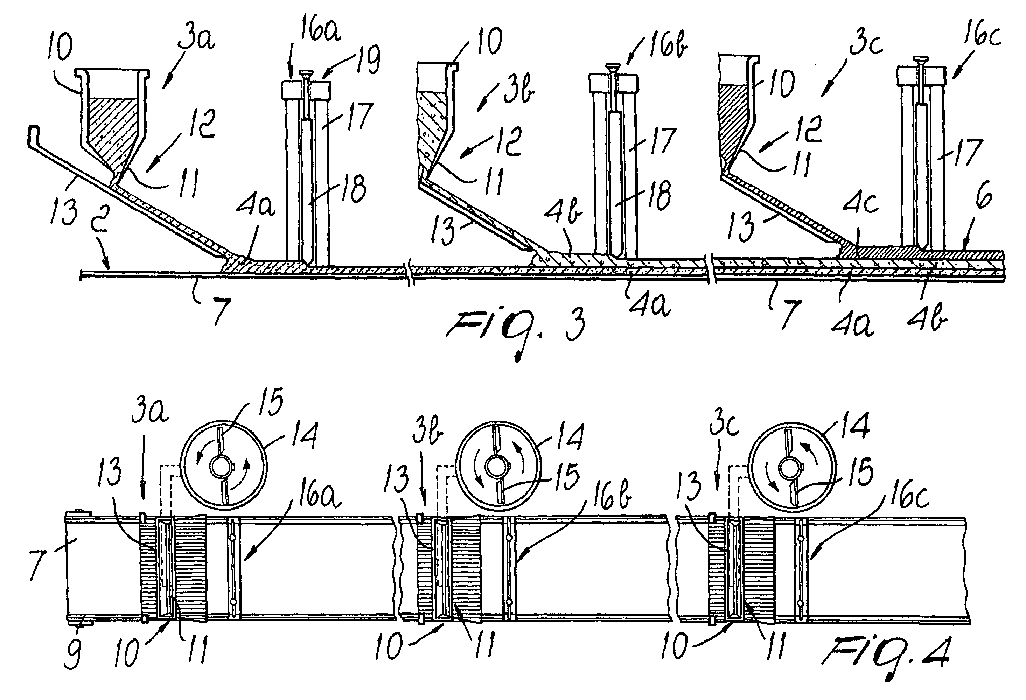

Figure 3 is a partially sectional front view of three successive stations for deposition by pouring and of the corresponding leveling stations of the apparatus according to the invention;
Figure 4 is a plan view of the stations of Figure 3;
Figure 5 is a block diagram of a possible method for manufacturing ceramic products which comprises the forming method according to the invention.

With particular reference to the above figures, 1 generally designates an apparatus for forming ceramic products according to the invention.

The apparatus 1 comprises a frame for supporting a motorized planar conveyance system 2 which is made of porous-type material and along which three stations 3a, 3b and 3c are distributed, said stations being designed to deposit by pouring, onto the planar system 2, fluid mixtures of ceramic material in mutually stacked continuous layers 4a, 4b and 4c.

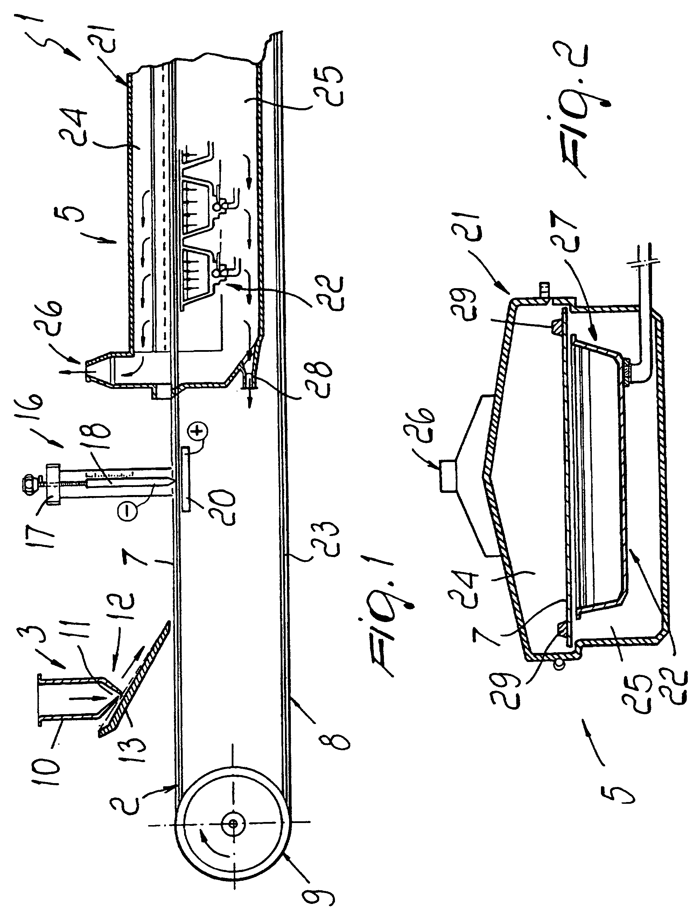

The deposition stations 3a, 3b and 3c are distributed along the conveyance system 2 so as to be sequentially alternated with respective stations 5 for drying the deposited layers 4a, 4b and 4c in order to obtain a continuous ribbon 6 of plastic ceramic material. For the sake of simplicity, only one drying station 5 (Figure 1) is shown, since the other ones are entirely similar.

The first layer 4a is deposited directly onto the conveyance system 2, and each successive layer 4b, 4c is deposited onto the underlying previously deposited and dried layer 4a and 4b respectively.

The apparatus 1 further comprises a station for separating the ribbon 6 from the conveyance system 2 and for transferring the separated ribbon on a subsequent line for conveyance towards a station for cutting the ribbon into individual products.

The supporting frame of the planar conveyance system, provided with conventional supporting and movement systems, the station for separating the ribbon, the conveyance line, of the belt or roller type, and the ribbon cutting station are not shown, since they are of the conventional type.

The conveyance system 2 is constituted by an active upper portion 7 of a flexible and porous belt 8 which is closed in a loop and wound around pairs of pulleys 9.

The deposited fluid mixtures are constituted for example by aqueous suspensions (slurries) of ground ceramic material discharged from the mills and are optionally colored or have received the addition of other minerals.

The slurries can receive the addition of specific quantities of appropriate corrective agents in order to reduce their water content as much as possible, while ensuring good grinding of the ceramic material and a degree of flow which ensures deposition by pouring of said slurries.

Each deposition station 3a, 3b and 3c comprises a hopper 10, fed by a suitably provided pump, which is arranged above the active portion 7 of the belt 8 and is provided, in a downward region, with an outlet 11 for the fluid mixture of ceramic material.

The outlet 11 can be constituted for example by the slit of an extrusion plate whose aperture is adjustable in order to adjust the thickness of the layer of mixture to be deposited.

Each deposition station 3a, 3b and 3c further comprises, proximate to the outlet 11, an adjustment blade 12 which determines the flow of the fluid mixture in output and a chute 13 for depositing the falling fluid mixture onto the active portion 7 or onto the previously deposited layer (4a, 4b).

The hoppers 10 are fed with fluid mixtures being contained in appropriate vats 14 which are arranged to the side of the belt 8 and are provided with means 15 for moving said mixtures in order to avoid their deposition and keep them uniform.

These deposition devices, already in use in other cases, can be replaced with other conventional systems adapted for the purpose.

The apparatus 1 comprises, downstream of the deposition stations 3a, 3b and 3c, and upstream of the respective drying stations 5, corresponding leveling stations 16a, 16b and 16c for the deposited layers 4a, 4b and 4c.

Each leveling station 16a, 16b and 16c is constituted by a supporting frame 17 for a tapering blade 18 which is substantially vertical, is provided with adjustment means 19 and evens out the surface and the thickness of the freshly deposited layer.

In order to improve the deposition by pouring of the various layers onto the active upper portion 7 it is possible to utilize the electro deposition technique by applying a DC voltage between said portion 7, or an underlying grid 20, and one or more surfaces of the corresponding deposition station, or leveling station, such as for example the tapering blade 18.

Each drying station 5 (Figure 1) comprises a controlled-ventilation chamber 21 which contains a plurality of heat generator means 22 which are arranged between the upper portion 7 and the lower portion 23 of the belt 8 and transfer the generated heat to the stacked layers deposited on the active portion 7.

The chamber 21 is constituted by two distinct ducts 24 and 25 which are separated by the upper active portion 7: the upper duct 24 is kept in thermohydrometrically controlled conditions, so as to create inside it an atmosphere which is substantially saturated with vapor, and is provided with a vapor outlet port 26.

The heat generation means 22 are contained in the lower duct 25 and are constituted by plate-type gas burners 27 or, as an alternative, by electric radiators or the like, arranged directly below the active upper portion 7 and distributed along its length so as to radiate heat mainly as infrared radiation.

The combustion gases, together with the vapor generated during drying, are aspirated by the outlet 28 with which the lower duct 25 is provided.

Advantageously, both outlets 26 and 28 are associated with separate suction adjustment systems.

The stacked layers of fluid mixtures deposited on the upper portion 7 thus receive heat from below and lose water by evaporation by means of the heating of the underlying region.

Since the migration of water in a body from the center towards the surface occurs at a rate which is a function of the thickness, the differences in humidity and the characteristics of the body itself (composition, particle size), the heat generation means 22 have a partly flexible arrangement which allows to adapt the heat transfer to the different evaporation rate requirements that occur as a plurality of successive stacked layers are deposited.

The duct 24 allows to provide a controlled-humidity atmosphere, so as to limit evaporation at the upper surface of the ribbon 6, and instead facilitate evaporation through the belt upper portion 7, from the underlying region 25 of which the vapor is collected and evacuated; this avoids the forming of internal pockets of residual humidity and differential shrinkages of the ribbon 6.

The chamber 21 allows to transfer the heat generated by the generation means 22 by radiation or, as an alternative, by convection, avoiding unnecessary dissipation into the outside environment.

The several stations for deposition by pouring 3 and the respective drying stations 5 are distributed in an alternating sequence along the belt 8 at appropriate distances from each other according to the length and advancement rate of said belt, in order to allow the layers of fluid mixtures gradually deposited on each other to dry, passing from the fluid state to the plastic state prior to the subsequent deposition.

The advancement rate of the belt 8 is adjusted by devices, not shown, which keep it rigorously constant but allow to modify it, adapting it to the different drying times.

As mentioned, the drying of the several layers of deposited fluid mixtures occurs from below, by supplying them with heat from the region below the upper portion 7.

Accordingly, the belt 8 must be made of porous and heat-resistant material, must allow the transfer of the heat from the generation means 22 to the layers deposited on the upper portion 7, and must be permeable to the vapor that is produced in the drying stations.

Conveniently, the belt 8 is provided with mutually opposite lateral edges 29 which run along its entire length in order to contain the ribbon 6 and are made of non-stick material.

The last layer of fluid mixture that is deposited by pouring can be constituted by a colored slurry formed from the same raw materials as the underlying layers or by more valuable raw materials in order to have better technical and/or aesthetic results, or by slurries with the addition of other minerals (corundum, zirconium silicate, or others), or by ceramic glazes.

Moreover, the station for deposition by pouring of the last layer can comprise a plurality of pumps for feeding different slurries mixed together in a programmed or random fashion, said pumps being associated with a single deposition device (hopper or the like).

In a particular embodiment, the apparatus 1 can comprise a station for glazing the last deposited layer of the ribbon 6, followed by a corresponding drying station, and/or a station for decorating the last deposited layer in which it is possible to provide decorations with a roller, airbrush or other methods; all said stations are not shown because of a conventional type.

Finally, it is possible to provide a station for adjusting the thickness of the ribbon which lies upstream of the cutting station and in which the thickness of the ribbon is adjusted and evened out automatically by "rolling" by a device which is formed by pairs of rollers which rotate with a rim velocity which is synchronous with respect to the motion of said ribbon and in the same direction of advancement.

The method for forming ceramic products according to the invention and performed with the apparatus 1 provides for a plurality of steps for deposition by pouring, onto the porous breathable and heat-resistant planar conveyance system, fluid mixtures of ceramic materials in mutually stacked continuous layers so as to be sequentially alternated with respective steps for drying the deposited layers in order to obtain a continuous ribbon of plastic ceramic material.

The method further comprises a step for separating the ribbon from the planar conveyance system, a step for transferring said ribbon onto a subsequent conveyance line, and a step for cutting the ribbon into individual products.

The first layer is deposited directly onto the planar conveyance system, while each successive layer is deposited onto the underlying previously deposited and dried layer.

Each drying step consists in providing the deposited layers with heat from below by radiation or convection and allows the deposited layers of fluid mixtures to lose the excess water, assuming a plastic consistency.

Drying occurs in a controlled manner, so that the ribbon has a content of residual humidity which gives it the plasticity required to perform the separation and cutting steps.

The density and viscosity of the fluid mixtures deposited by pouring, the execution times of the various successive steps of deposition and of the respective drying steps, and the heating power supplied for drying are all parameters which can be controlled in order to obtain a defect-free plastic continuous ribbon.

The method according to the invention comprises, downstream of one or more steps for deposition by pouring and upstream of the respective drying steps, corresponding steps for leveling the deposited layer.

It is further possible to provide a step for glazing the last deposited layer of the ribbon and/or a step for decorating the last deposited layer of the ribbon and/or a step for adjusting the thickness by "rolling" before the cutting step.

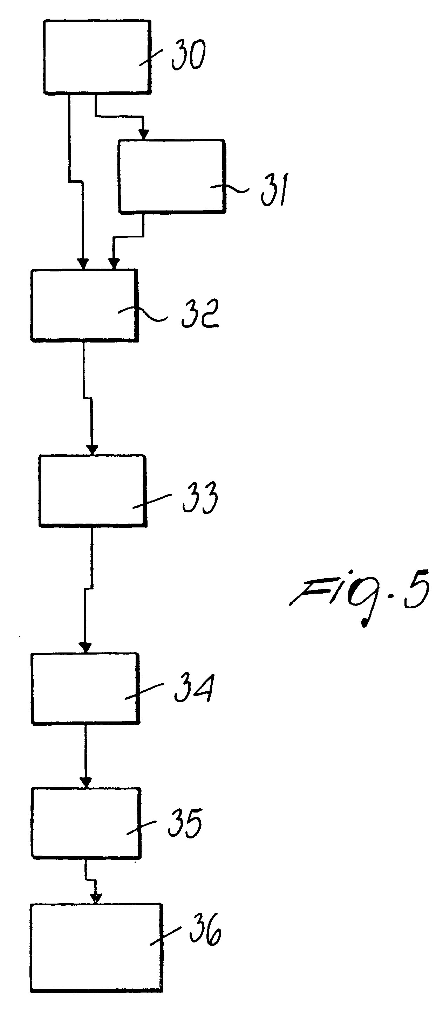

The individual cut items, i.e. the tiles, after rolling, cutting and lateral finishing, follow the conventional manufacturing process: drying, firing, selection and packaging, as shown in Figure 5.

In particular, 30 designates the step for wet grinding of the raw materials in order to obtain slurries, 31 designates the step for coloring the slurries, 32 designates the method for forming by pouring according to the invention, 33 designates the step for cutting and finishing the formed ribbon, 34 designates the step for drying the cut products, 35 designates the step for packaging the fired products.

In practice it has been observed that the described invention achieves the intended aim and object, i.e. it allows to increase production flexibility, differentiate the treatment and tailor the use of the different raw materials according to their specific characteristics, increase the technical and aesthetic value of the products, and at the same time limit the waste and cost of material and extend the possibilities of treatment and differentiation of the products in order to meet the changeable requirements of the market.

Moreover, the production of products by directly using the slurries requires only the presence of corresponding containment vats: direct transfer from the grinding department to the forming department is therefore possible.

Advantageously, it is also possible to differentiate the compositions of the base and of the surface layer of the products, leading to a considerable saving linked to the high incidence of coloring oxides on production costs.

Finally, the possibility to manufacture the body of the product in a plurality of distinct depositions by pouring opens a range of technical possibilities with considerable economic effects (separate formulation, separate coloring agents, differentiated grinding).

The greatest overall benefit, however, arises from the new and extensive possibilities of diversification that are obtained on application: the several surfaces provided on ceramic tiles can be reproduced with different combinations of applications and it is possible to obtain new effects which arise from the possibility to mix together colored fluid mixtures.

The invention thus conceived is susceptible of numerous modifications and variations, all of which are within the scope of the appended claims.

In practice, the materials used, as well as the shapes and the dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for forming ceramic products comprising a plurality of steps for depositing by pouring, on a motorized, planar conveyance system (2) that is made of a heat-resistant material adapted for heat transfer, fluid mixtures of ceramic material in continuous stacked layers (4a, 4b, 4c), and steps for drying the deposited layers (4a, 4b, 4c), with the first (4a) one of said layers being deposited on the planar conveyance system (2) and each successive layer (4b, 4c) being deposited on the previously deposited layer in order to obtain a continuous ribbon of plastic ceramic material (6), **characterized in that** the method further comprises a step for separating said ribbon (6) from said planar conveyance system (2) and for transferring it onto a subsequent conveyance line, and a step for cutting said ribbon (6) into individual products, **in that** said depositing steps are sequentially alternated with respective ones of said drying steps, with each successive layer (4b, 4c) being deposited on the previously deposited underlying layer after drying thereof, and **in that** said drying steps comprise supplying heat predominantly from below the layers (4a, 4b, 4c) deposited on said planar conveyance system (2) wherein said heat-resistant material is a porous-type material that is permeable to vapor developed in said drying steps.

2. The method according to claim 1, **characterized in that** said heat is supplied by radiation from the region below said planar conveyance system (2).

3. The method according to claim 1, **characterized in that** said heat is supplied by convection from the region below said planar conveyance system (2).

4. The method according to one or more of the preceding claims, **characterized in that** it comprises, after one or more of said deposition steps and before the respective drying steps, corresponding steps for leveling the deposited layer (4a, 4b, 4c).

5. The method according to one or more of the preceding claims, **characterized in that** it comprises at least one step for glazing the last deposited layer (4c) of said ribbon (6) and a corresponding drying step.

6. The method according to one or more of the preceding claims, **characterized in that** it comprises at least one step for decorating the last deposited layer (4c) of said ribbon (6).

7. The method according to one or more of the preceding claims, **characterized in that** it comprises a step for adjusting the thickness of said ribbon (6) before said cutting step.

8. An apparatus (1) for forming ceramic products comprising: a frame for supporting a motorized planar conveyance system (2) which is made of a heat-resistant material adapted for heat transfer; a plurality of stations (3a, 3b, 3c) for depositing by pouring, onto said planar conveyance system (2), fluid mixtures of ceramic material in continuous stacked layers (4a, 4b, 4c); and stations (5) with heat generation means (22) for drying the deposited layers (4a, 4b, 4c) in order to obtain a continuous ribbon (6) of plastic ceramic material, **characterized in that** it further comprises a station for cutting said ribbon (6) into individual products, and a station for separating said ribbon (6) from said planar conveyance system (2) and transferring said ribbon (6) onto a successive line for conveyance towards said cutting station, and **in that** said deposition stations (3a, 3b, 3c) are distributed along the planar conveyance system (2) so as to be sequentially alternated with respective ones of said stations (5) for drying a deposited layer (4a, 4b) before deposition of the subsequent layer (4b, 4c), said heat-resistant material being and a porous-type material that is permeable to vapor developed during drying, and said heat generation means (22) being arranged below said planar conveyance system (2) so as to transfer heat predominantly from below to the layers (4a, 4b, 4c) deposited on said planar conveyance system (2).

9. The apparatus according to claim 8, **characterized in that** said planar conveyance system (2) is constituted by at least one active upper portion (7) of a flexible belt (8) which is closed in a loop and is wound around pairs of pulleys (9).

10. The apparatus according to claims 8 or 9, **characterized in that** each one of said deposition stations (3a, 3b, 3c) comprises at least one feeder pump which is associated with a hopper (10), which lies above said planar conveyance system (2) and is provided, in a downward region, with an outlet (11) for the fluid mixture.

11. The apparatus according to claim 10, **characterized in that** each one of said deposition stations (3a, 3b, 3c) comprises, proximate to the outlet (11) of said hopper (10), a blade (12) for adjusting the flow of the mixture and a chute (13) for depositing the mixture on said planar conveyance system (2) or on the previously deposited layer (4a, 4b).

12. The apparatus according to one or more of the preceding claims 8 to 11, **characterized in that** it comprises, downstream of one or more of said deposition stations (3a, 3b, 3c) and upstream of the respective drying stations (5), corresponding stations (16a, 16b, 16c) for leveling the deposited layer (4a, 4b, 4c) which are constituted by a frame (17) for supporting at least one substantially vertical blade (18) which tapers the freshly deposited layer (4a, 4b, 4c).

13. The apparatus according to one or more of the preceding claims 8 to 12, **characterized in that** each one of said drying stations (5) comprises a controlled-ventilation chamber (21) that contains said heat generation means (22) which are arranged below said planar conveyance system (2) and are adapted to transfer heat to the layers (4a, 4b, 4c) deposited on said system (2).

14. The apparatus according to claim 13, **characterized in that** said controlled-ventilation chamber (21) is constituted by two distinct ducts (24, 25) which are separated by said planar conveyance system (2), an upper duct (24) being thermohydrometrically controlled and being substantially saturated with vapor, and a lower duct (25) being designed to contain said heat generation means (22) and means (28) for evacuating the generated gas and vapor.

15. The apparatus according to one or more of the preceding claims 8 to 14, **characterized in that** said heat generation means (22) are constituted by plate-type gas burners (27), which are adapted to radiate heat towards said planar conveyance system (2).

16. The apparatus according to one or more of the preceding claims 8-14, **characterized in that** said heat generation means (22) are constituted by electric radiators, which are adapted to radiate heat towards said planar conveyance system (2).

17. The apparatus according to one or more of the preceding claims 9-16, **characterized in that** said belt (8) is provided with mutually opposite lateral ribbon containment edges (29) which are made of non-stick material.

18. The apparatus according to one or more of the preceding claims 8 to 17, **characterized in that** the station (3) for depositing the last layer (4c) of said ribbon (6) comprises a plurality of pumps for feeding different fluid mixtures of ceramic material which are mixed together in a programmed or random manner and are associated with a single deposition device (10) such as a hopper.

19. The apparatus according to one or more of the preceding claims 8 to 18, **characterized in that** it comprises at least one station for glazing the last deposited layer (4c) of said ribbon (6) and a corresponding drying station (5).

20. The apparatus according to one or more of the preceding claims 8 to 19, **characterized in that** it comprises at least one station for decorating the last deposited layer (4c) of said ribbon.

21. The apparatus according to one or more of the preceding claims 8 to 20, **characterized in that** it comprises a station for adjusting the thickness of said ribbon (6) which is arranged upstream of said cutting station.

## Patentansprüche

1. Verfahren zum Herstellen von keramischen Gegenständen mit einer Vielzahl von Schritten zum Aufbringen von Flüssigmischungen aus keramischem Material in kontinuierlichen, übereinander gelagerten Schichten (4a, 4b, 4c) durch Vergießen auf ein mit einem Motor betriebenes, ebenes Fördersystem (2), das aus einem wärmebeständigen Material hergestellt ist, das zur Wärmeübertragung geeignet ist, sowie Schritten zum Trocknen der aufgebrachten Schichten (4a, 4b, 4c), wobei die erste (4a) der Schichten auf das ebene Fördersystem (2) aufgebracht wird, und jede folgende Schicht (4 b, 4c) auf die vorhergehende Schicht aufgebracht wird, so dass man ein kontinuierliches Band aus plastischem, keramischem Material (6) erhält, **dadurch gekennzeichnet, dass** das Verfahren weiterhin einen Schritt zum Entfernen des Bandes (6) von dem ebenen Fördersystem (2) enthält, sowie für seine Übertragung auf ein nachfolgendes Transportband, sowie einen Schritt zum Durchschneiden des Bandes (6) in einzelne Gegenstände, dass sich die Schritte des Aufbringens jeweils mit den Schritten des Trocknens abwechseln, wobei jede nachfolgende Schicht (4b, 4c) auf die zuvor aufgebrachte Schicht aufgetragen wird, nachdem diese getrocknet wurde, und dass die Schritte des Trocknens darin bestehen, dass Wärme den Schichten (4a, 4b, 4c), die auf das ebene Fördersystem (2) aufgebracht wurden, vor allem von unten zugeführt wird, wobei es sich bei dem wärmebeständigen Material um ein poröses Material handelt, das für den Dampf, der sich bei den Trocknungsschritten entwickelt, durchdringlich ist.

2. Verfahren nach Anspruch 1, **dadurch gekennzeichnet, dass** die Wärme durch Strahlung aus dem Bereich unter dem ebenen Fördersystem (2) zugeführt wird.

3. Verfahren nach Anspruch 1, **dadurch gekennzeichnet, dass** die Wärme durch Konvektion aus dem Bereich unter dem ebenen Fördersystem (2) zugeführt wird.

4. Verfahren nach einem oder mehreren der vorhergehenden Ansprüche, **dadurch gekennzeichnet, dass** es nach einem oder mehreren der Schritte zum Aufbringen und vor den jeweiligen Trocknungsschritten entsprechende Schritte zum Nivellieren der aufgebrachten Schicht (4a, 4b, 4c) besitzt.

5. Verfahren nach einem oder mehreren der vorhergehenden Ansprüche, **dadurch gekennzeichnet, dass** es mindestens einen Schritt zum Glasieren der letzten, aufgebrachten Schicht (4c) des Bandes (6) und einen entsprechenden Trocknungsschritt besitzt.

6. Verfahren nach einem oder mehreren der vorhergehenden Ansprüche, **dadurch gekennzeichnet, dass** es mindestens einen Schritt zum Verzieren der letzten, aufgetragenen Schicht (4c) des Bandes (6) besitzt.

7. Verfahren nach einem oder mehreren der vorhergehenden Ansprüche, **dadurch gekennzeichnet, dass** es vor dem Schritt des Durchschneidens des Bandes einen Schritt zur Anpassung der Stärke des Bandes (6) besitzt.

8. Vorrichtung (1) zum Herstellen von keramischen Gegenständen mit : einem Rahmen zur Abstützung eines mit einem Motor betriebenen, ebenen Fördersystems (2), das aus einem wärmebeständigen Material hergestellt ist, das zur Wärmeübertragung geeignet ist ; einer Vielzahl von Stationen (3a, 3b, 3c) zum Aufbringen von Flüssigmischungen aus keramischem Material in kontinuierlichen, übereinander gelagerten Schichten (4a, 4b, 4c) durch Vergießen auf das ebene Fördersystem ; und Stationen (5) mit Wärmeerzeugungselementen (22) zum Trocknen der aufgebrachten Schichten (4a, 4b, 4c), so dass man ein kontinuierliches Band (6) aus plastischem, keramischem Material erhält, **dadurch gekennzeichnet, dass** sie außerdem eine Station zum Durchschneiden des Bandes (6) in einzelne Gegenstände sowie eine Station zum Entfernen des Bandes (6) von dem ebenen Transportsystem (2) und der Übertragung des Bandes (6) auf ein anschließendes Band zum Transport zur Schneidestation besitzt, und dass die Stationen zum Aufbringen (3a, 3b, 3c) über das ebene Transportsystem (2) verteilt sind, so dass sie sich mit den Stationen (5) zum Trocknen einer aufgetragenen Schicht (4a, 4b) abwechseln, bevor die nächste Schicht (4b, 4c) aufgebracht wird, wobei es sich bei dem wärmebeständigen Material um ein poröses Material handelt, das für den Dampf, der sich beim Trocknen entwickelt, durchlässig ist, und die Wärmeerzeugungselemente (22) unter dem ebenen Transportsystem (2) angeordnet sind, so dass die Wärme vorwiegend aus dem Bereich unter den Schichten (4a, 4b, 4c), die auf das ebene Transportsystem (2) aufgebracht wurden, übertragen wird.

9. Vorrichtung nach Anspruch 8, **dadurch gekennzeichnet, dass** das ebene Transportsystem (2) aus mindestens einem aktiven, oberen Abschnitt (7) eines flexiblen Bandes (8) besteht, das in einem Kreis geschlossen und um Rollenpaare (9) herum aufgewickelt ist.

10. Vorrichtung nach Anspruch 8 oder 9, **dadurch gekennzeichnet, dass** jede der Stationen zum Aufbringen (3a, 3b, 3c) mindestens eine Förderpumpe besitzt, die mit einem Trichter (10) verbunden ist, der oberhalb des ebenen Transportsystems (2) angeordnet ist, und in einem nach unten gerichteten Bereich einen Austritt (11) für die Flüssigmischung besitzt.

11. Vorrichtung nach Anspruch 10, **dadurch gekennzeichnet, dass** jede der Stationen zum Aufbringen ( 3a, 3b, 3c) in der Nähe des Austritts (11) des Trichters (10) einen Flügel (12) zur Verstellung der Durchflussmenge der Mischung sowie eine Schurre (13) für das Aufbringen der Mischung auf das ebene Transportsystem (2) oder auf der zuvor aufgebrachten Schicht (4a, 4b) besitzt.

12. Vorrichtung nach einem oder mehreren der vorhergehenden Ansprüche 8 bis 11, **dadurch gekennzeichnet, dass** sie nach einer oder mehreren der Stationen zum Aufbringen (3a, 3b, 3c) und vor den jeweiligen Trocknungsstationen (5) entsprechende Stationen (16a, 16b, 16c) zum Nivellieren der aufgebrachten Schicht (4a, 4b, 4c) besitzt, die aus einem Rahmen (17) bestehen, an dem zumindest ein, im wesentlichen vertikales, Messer (18) befestigt ist, mit dem die frisch aufgebrachte Schicht (4a, 4b, 4c) vergleichmäßigt wird.

13. Vorrichtung nach einem oder mehreren der vorhergehenden Ansprüche 8 bis 12, **dadurch gekennzeichnet, dass** jede der Trocknungsstationen (5) eine Kammer mit kontrollierter Belüftung (21) besitzt, die Wärmeerzeugungselemente (22) enthält, welche unter dem ebenen Transportsystem (2) angeordnet und so ausgebildet sind, dass sie Wärme auf die Schichten (4a, 4b, 4c) übertragen, die auf das System (2) aufgetragen wurden.

14. Vorrichtung nach Anspruch 13, **dadurch gekennzeichnet, dass** die Kammer mit kontrollierter Belüftung (21) aus zwei unterschiedlichen Kanälen (24, 25) besteht, die durch das ebene Transportsystem (2) voneinander getrennt sind, wobei ein oberer Kanal (24) thermohydroaräometrisch gesteuert wird und im wesentlichen mit Dampf gesättigt ist, und ein unterer Kanal (25) so ausgebildet ist, dass er Wärmeerzeugungselemente (22) und Elemente (28) zum Abzug des erzeugten Gases und Dampfes enthält.

15. Vorrichtung nach einem oder mehreren der vorhergehenden Ansprüche 8 bis 14, **dadurch gekennzeichnet, dass** es sich bei den Wärmeerzeugungselementen (22) um Platten-Gasbrenner (27) handelt, die Wärme auf das ebene Transportsystem (2) abstrahlen.

16. Vorrichtung nach einem oder mehreren der vorhergehenden Ansprüche 8 bis 14, **dadurch gekennzeichnet, dass** die Wärmeerzeugungselemente (22) aus elektrischen Radiatoren bestehen, die Wärme auf das ebene Transportsystem (2) abstrahlen.

17. Vorrichtung nach einem oder mehreren der vorhergehenden Ansprüche 9 bis 16, **dadurch gekennzeichnet, dass** das Band (8) mit einander gegenüberliegenden, seitlichen Eingrenzungskanten (29) versehen ist, die aus nicht haftendem Material hergestellt sind.

18. Vorrichtung nach einem oder mehreren der vorhergehenden Ansprüche 8 bis 17, **dadurch gekennzeichnet, dass** die Station (3) für das Aufbringen der letzten Schicht (4c) des Bandes (6) eine Vielzahl von Pumpen besitzt, um verschiedene Flüssigmischungen des keramischen Materials zuzuführen, die in programmierter oder willkürlicher Art und Weise miteinander vermischt werden, und mit einer einzelnen Auftragvorrichtung (10) wie einem Trichter verbunden sind.

19. Vorrichtung nach einem oder mehreren der vorhergehenden Ansprüche 8 bis 18, **dadurch gekennzeichnet, dass** sie mindestens eine Station zum Glasieren der letzten aufgebrachten Schicht (4c) des Bandes (6) und eine entsprechende Trocknungsstation (5) besitzt.

20. Vorrichtung nach einem oder mehreren der vorhergehenden Ansprüche 8 bis 19, **dadurch gekennzeichnet, dass** sie mindestens eine Station zum Verzieren der letzten aufgebrachten Schicht (4c) des Bandes besitzt.

21. Vorrichtung nach einem oder mehreren der vorhergehenden Ansprüche 8 bis 20, **dadurch gekennzeichnet, dass** sie eine Station zum Ausgleichen der Stärke des Bandes (6) besitzt, die vor der Durchschneidestation angeordnet ist.

## Revendications

1. Méthode pour le façonnage de produits en céramique comprenant plusieurs étapes pour le dépôt par coulée, sur un système de transport plan motorisé (2) qui est fabriqué en un matériau résistant à la chaleur adapté à l'acheminement à chaud, de mélanges fluides de matériau céramique en couches empilées continues (4a, 4b, 4c), et des étapes de séchage des couches déposées (4a, 4b, 4c), avec la première (4a) desdites couches étant déposée sur le système de transport plan (2) et chacune des couches successives (4b, 4c) étant déposée sur la couche précédemment déposée de façon à obtenir une bande continue de matériau céramique plastique (6), **caractérisée en ce que** la méthode comprend en outre une étape pour séparer ladite bande (6) dudit système de transport plan (2) et pour la transférer à une ligne de transport suivante, et une étape pour découper ladite bande (6) en produits séparés, **en ce que** lesdites étapes de dépôt alternent séquentiellement avec respectivement chacune desdites étapes de séchage, chaque couche successive (4b, 4c) étant déposée sur la couche sous-jacente précédemment déposée après le séchage de celle-ci, et **en ce que** lesdites étapes de séchage comprennent une alimentation en chaleur essentiellement depuis le dessous des couches (4a, 4b, 4c) déposées sur ledit système de transport plan (2) dans lequel ledit matériau résistant à la chaleur est un matériau de type poreux qui est perméable à la vapeur produite dans lesdites étapes de séchage.

2. Méthode selon la revendication 1, **caractérisée en ce que** ladite chaleur est fournie par radiation depuis la région au dessous dudit système de transport plan (2).

3. Méthode selon la revendication 1, **caractérisée en ce que** ladite chaleur est fournie par convection depuis la région au dessous dudit système de transport plan (2).

4. Méthode selon l'une ou plus des revendications précédentes, **caractérisée en ce qu'**elle comprend, après l'une ou plus desdites étapes de dépôt et avant les étapes respectives de séchage, des étapes correspondantes pour le nivelage de la couche déposée (4a, 4b, 4c).

5. Méthode selon l'une ou plus des revendications précédentes, **caractérisée en ce qu'**elle comprend au moins une étape de vernissage de la dernière couche déposée (4c) de ladite bande (6) et une étape de séchage correspondante.

6. Méthode selon l'une ou plus des revendications précédentes, **caractérisée en ce qu'**elle comprend au moins une étape de décoration de la dernière couche déposée (4c) de ladite bande (6).

7. Méthode selon l'une ou plus des revendications précédentes, **caractérisée en ce qu'**elle comprend une étape de réglage de l'épaisseur de ladite bande (6) avant ladite étape de découpe.

8. Appareil (1) pour façonner des produits en céramique comprenant : un bâti pour supporter un système de transport plan motorisé (2) qui est fait en un matériau résistant à la chaleur adapté à l'acheminement à chaud ; plusieurs stations (3a, 3b, 3c) pour le dépôt par coulée, sur ledit système de transport plan (2), de mélanges fluides de matériau céramique en couches empilées continues (4a, 4b, 4c) ; et des stations (5) avec un moyen de production de chaleur (22) pour le séchage des couches déposées (4a, 4b, 4c) de façon à obtenir une bande continue de matériau céramique plastique (6), **caractérisé en ce qu'**il comprend de plus une station pour la découpe de ladite bande (6) en produits séparés, et une station pour la séparation de ladite bande (6) dudit système de transport plan (2) et pour le transfert de ladite bande à une ligne de transport suivante vers ladite station de découpe, et **en ce que** lesdites stations de dépôt (3a, 3b, 3c) sont distribuées le long du système de transport plan (2) de façon à alterner séquentiellement avec respectivement chacune desdites stations (5) pour le séchage d'une couche déposée (4a, 4b) avant le dépôt de la couche suivante (4b, 4c), le dit matériau résistant à la chaleur étant un matériau de type poreux qui est perméable à la vapeur produite pendant le séchage ; et ledit moyen de production de chaleur (22) étant disposé sous le système de transport plan (2) de façon à transférer la chaleur essentiellement depuis le bas des couches (4a, 4b, 4c) déposées sur ledit système de transport plan (2).

9. Appareil selon la revendication 8, **caractérisé en ce que** ledit système de transport plan (2) est constitué par au moins une partie supérieure active (7) d'une courroie flexible (8) qui est fermée en boucle et qui s'enroule autour d'une paire de poulies (9).

10. Appareil selon les revendications 8 ou 9, **caractérisé en ce que** chacune desdites stations de dépôt (3a, 3b, 3c) comprend au moins une pompe d'alimentation laquelle est associée à une trémie (10), qui est au dessus dudit système de transport plan (2) et qui est munie, dans sa partie du bas, d'une sortie (11) pour le mélange liquide.

11. Appareil selon la revendication 10, **caractérisé en ce que** chacune desdites stations de dépôt (3a, 3b, 3c) comprend, au voisinage de la sortie (11) de ladite trémie (10), une lame (12) pour le réglage de l'écoulement du mélange et un déversoir (13) pour déposer le mélange sur ledit système de transport plan ou sur la couche précédemment disposée (4a, 4b).

12. Appareil selon une ou plusieurs des précédentes revendications de 8 à 11, **caractérisé en ce qu'**il comprend, en aval de l'une ou plus desdites stations de dépôt (3a, 3b, 3c) et en amont des stations de séchage respectives (5), des stations correspondantes (16a, 16b, 16c) pour le nivelage de la couche déposée (4a, 4b, 4c) lesquelles sont constituées d'un bâti (17) pour supporter au moins une lame sensiblement verticale (18) qui amincit la couche fraîchement déposée (4a, 4b, 4c).

13. Appareil selon une ou plusieurs des précédentes revendications de 8 à 12, **caractérisé en ce que** chacune desdites stations de séchage (5) comprend une chambre à ventilation contrôlée (21) qui contient ledit moyen de production de chaleur (22) lequel est disposé dessous ledit système de transport plan (2) et est adapté au transfert de chaleur vers les couches (4a, 4b, 4c) déposées sur ledit système (2).

14. Appareil selon la revendication 13, **caractérisé en ce que** ladite chambre à ventilation contrôlée (21) est constituée par deux conduits distincts (24, 25) qui sont séparés par ledit système de transport plan (2), un conduit supérieur (24) étant contrôlé des points de vue thermique et hydrométrique et étant substantiellement saturé en vapeur, et un conduit inférieur (25) étant conçu pour contenir ledit moyen de production de chaleur (22) et un moyen (28) pour l'évacuation du gaz et de la vapeur produits.

15. Appareil selon une ou plusieurs des précédentes revendications de 8 à 14, **caractérisé en ce que** ledit moyen de production de chaleur (22) est constitué par des brûleurs à gaz de type plat (27), qui sont adaptés à rayonner la chaleur en direction dudit système de transport plan (2).

16. Appareil selon une ou plusieurs des précédentes revendications de 8 à 14, **caractérisé en ce que** ledit moyen de production de chaleur est constitué par des radiateurs électriques qui sont adaptés à rayonner la chaleur en direction dudit système de transport plan (2).

17. Appareil selon une ou plusieurs des précédentes revendications de 9 à 16, **caractérisé en ce que** ladite courroie (8) est munie de bords latéraux mutuellement opposés (29) de confinement de la bande lesquels sont faits d'un matériau non-adhérent.

18. Appareil selon une ou plusieurs des précédentes revendications de 8 à 17, caractérisé en ce la station (3) de dépôt de la dernière couche (4c) de ladite bande (6) comprend plusieurs pompes d'alimentation en différents mélanges fluides de matériau céramique qui sont mélangés les uns aux autres de façon programmée ou aléatoire et sont associées à un dispositif unique de dépôt (10), tel qu'une trémie.

19. Appareil selon une ou plusieurs des précédentes revendications de 8 à 18, **caractérisé en ce qu'**il comprend au moins une station pour le vernissage de la dernière couche déposée (4c) de ladite bande (6) et une station de séchage correspondante (5).

20. Appareil selon une ou plusieurs des précédentes revendications de 8 à 19, **caractérisé en ce qu'**il comprend au moins une station de décoration de la dernière couche (4c) de ladite bande.

21. Appareil selon une ou plusieurs des précédentes revendications de 8 à 20, **caractérisé en ce qu'**il comprend une station de réglage de l'épaisseur de ladite bande (6) qui est placée en amont de la station de découpe.
